# EUROPEAN PATENT APPLICATION

(11) **EP 4 245 686 A1**
(43) Date of publication of application: **20.09.2023**
(21) Application number: 22842493.3
(22) Date of filing: 14.07.2022
(51) Int. Cl.: B65D 81/02, B65D 81/113, H01M 50/20, B65D 25/10, B65D 81/24, B65D 81/26

(54) **AIRTIGHT CONTAINER FOR BATTERY CELLS**

(30) Priority: 14.07.2021 KR 20210092490; 02.06.2022 KR 20220067393
(71) Applicant: LG Energy Solution, Ltd., Seoul 07335 (KR)
(72) Inventor: CHOI, Jae-Sun, Daejeon 34122 (KR); LEE, Jun-Houng, Daejeon 34122 (KR); KWON, Joo-Yeok, Daejeon 34122 (KR); JANG, Eung-Jin, Daejeon 34122 (KR); KIM, Dae-Soo, Gumi-si Gyeongsangbuk-do 39461 (KR)
(74) Representative: Hoffmann Eitle
(86) International application number: PCT/KR2022/010312
(87) International publication number: WO 2023/287231

(57) **Abstract**

Provided is a battery cell sealed container for preventing corrosion or damage in a process of moving battery cells. A battery cell sealed container of the present disclosure includes a first tray including a bottom surface and a side wall, wherein the bottom surface includes a plurality of lower end receiving portions in which lower ends of a plurality of battery cells are respectively accommodated and the side wall extends upward from the bottom surface, and a second tray configured to seal the first tray, the second tray including a top surface and a side wall, wherein the top surface includes a plurality of upper end receiving portions in which upper ends of the plurality of battery cells accommodated in the lower end receiving portions are accommodated and the side wall extends downward from the top surface.

## Description

### TECHNICAL FIELD

The present disclosure relates to a battery cell sealed container, and more particularly, to a battery cell sealed container for preventing corrosion or damage in a process of moving battery cells. The present application claims priority to Korean Patent Application Nos. 10-2021-0092490 and 10-2022-0067393, respectively filed on July 14, 2021 and June 2, 2022 in the Republic of Korea, the disclosures of which are incorporated herein by reference.

### BACKGROUND ART

In general, in a secondary battery used in a small electronic product, one battery cell is packaged and distributed as a single battery cell, and in a large-capacity battery used in a hybrid vehicle or an electric vehicle, a plurality of battery cells are configured in pack units.

Such battery cells are manufactured as a battery pack and then are delivered to a vehicle manufacturer, or are delivered as individual battery cells and then are manufactured as a battery pack by a vehicle manufacturer or a battery pack manufacturer.

Because individual battery cells have a short circuit or damage due to contact during transport, the individual battery cells are loaded on a tray and then are packaged in a double paper box, or are packaged and delivered through a dedicated packing case such as a "battery packing case" disclosed in Korean Patent Application Publication No. 10-2014-0094898.

However, because an existing packaging method is not sealed, individual battery cells are easily corroded by moisture and sea wind.

For example, because an existing tray may cover only upper and lower portions of loaded battery cells, side surfaces of the loaded battery cells are not covered. Accordingly, to safely protect the loaded battery cells, it is necessary to apply a double paper box including an inner box and an outer packaging paper box. Due to the tray having a non-sealed structure and the paper box that is vulnerable to moisture, there is a high possibility of corrosion or the like of an outer case of the battery cells during long-term transportation and storage.

Accordingly, although a method of packaging through a sealed and reusable dedicated packing case is considered, it is difficult to use the expensive dedicated packing case due to the difficulty of recovery during export.

### [Prior art literature]

### [Patent literature]

Korean Patent Application Publication No. 10-2014-0094898, entitled "battery packing case"

### DISCLOSURE

### Technical Problem

The present disclosure is designed in consideration of the above problems, and therefore the present disclosure is directed to providing a battery cell sealed container for effectively preventing corrosion due to moisture and sea wind or damage due to impact.

### Technical Solution

The present disclosure is directed to a battery cell sealed container includes a first tray including a bottom surface and a side wall, wherein the bottom surface includes a plurality of lower end receiving portions in which lower ends of a plurality of battery cells are respectively accommodated and the side wall extends upward from the bottom surface, and a second tray configured to seal the first tray, the second tray including a top surface and a side wall, wherein the top surface includes a plurality of upper end receiving portions in which upper ends of the plurality of battery cells accommodated in the lower end receiving portions are accommodated and the side wall extends downward from the top surface.

The first tray may further include a flange extending outward along an edge of the side wall of the first tray, and the second tray may further include a coupling portion extending downward along an edge of the side wall of the second tray to cover and fit the flange. At least one locking end may protrude outward from the flange and may be interference-fitted against an inner surface of the coupling portion of the second tray.

The first tray may further include a fastening portion that is convex upward along an edge of the side wall of the first tray, and the second tray may further include a fastening groove that is concave at a lower portion along an edge of the side wall of the second tray to be fit around the fastening portion of the first tray, wherein the second tray further includes a packing member inserted into the fastening groove of the second tray to seal a space between the fastening groove and the fastening portion. The fastening groove of the second tray may be a groove having a bottom surface in the second tray to include an inlet opened toward the fastening portion, wherein an outer side surface of the groove is inclined so that the inlet of the groove is narrower than the bottom surface of the groove, and the packing member inserted into the fastening groove is fixed so as not to be separated.

The first tray may have a substantially rectangular box shape with an opening at a top thereof, and the bottom surface and the side wall of the first tray may be integrally formed, and the second tray may have a substantially rectangular box shape with an opening at a bottom thereof, and the top surface and the side wall of the second tray may be integrally formed.

Each of the first tray and the second tray may include four side walls, wherein when the second tray is located on the first tray to cover the first tray, four surfaces of the side walls of the first tray and the second tray contact each other, to seal an inside of the battery cell sealed container.

A height of the side wall of the first tray may be greater than a height of the side wall of the second tray.

The first tray may further include at least one notch groove that connects the side wall of the first tray to the lower end receiving portions.

The notch groove may fill a gap between the side wall of the first tray and the lower end receiving portions.

The battery cell sealed container may further include a dehumidifying agent receiving portion configured to provide a space in which a dehumidifying agent is accommodated on an inner surface of the side wall of the first tray.

The dehumidifying agent receiving portion may be provided between the side wall of the first tray and the lower end receiving portions, and the battery cell sealed container may further include at least one protrusion protruding upward from an inside of the first tray to support one surface of the dehumidifying agent so that the dehumidifying agent accommodated in the dehumidifying agent receiving portion is prevented from being inclined inward in the first tray and contacting the battery cells.

The battery cell sealed container may further include supports arranged along edges of the lower end receiving portions to support side surfaces of the battery cells accommodated in the lower end receiving portions. The dehumidifying agent receiving portion may be provided between the side wall and the lower end receiving portions, and the battery cell sealed container may further include, on the support, at least one protrusion protruding upward from an inside of the first tray to support one surface of the dehumidifying agent so that the dehumidifying agent accommodated in the dehumidifying agent receiving portion is prevented from being inclined inward in the first tray and contacting the battery cells.

Each of the first tray and the second tray may be formed of a PP without a rust inhibitor.

A plurality of first tray support ends may be formed on an inner side of the first tray, and may be asymmetrically arranged with respect to a center of the first tray.

A plurality of second tray support ends may be formed on an inner side of the second tray, and may be asymmetrically arranged with respect to a center of the second tray.

### Advantageous Effects

A battery cell sealed container according to the present disclosure has a completely sealed structure, and has high durability to ensure the basic safety of battery cells.

The battery cell sealed container according to the present disclosure may replace, for example, a tray and a double paper box used in the related art, and thus, may reduce loss in processes and packing materials.

The battery cell sealed container according to the present disclosure may prevent a gap between a side wall of a first tray and a lower end receiving portion through a notch groove, and may provide structural stability. The notch groove may additionally improve the strength of the side wall of the first tray.

The battery cell sealed container according to the present disclosure may further include supports arranged along an edge of the lower end receiving portion, to increase the structural rigidity of the first tray. The structural strength of the battery cell sealed container including the first tray is increased.

According to the battery cell sealed container of the present disclosure, because the first tray in which battery cells are accommodated is covered and sealed by a second tray and a dehumidifying agent is accommodated in the first tray, corrosion due to moisture and sea wind may be effectively prevented, and because the battery cells are fixed in a state where lower and upper ends of the battery cells are accommodated, damage due to impact may be effectively prevented.

The battery cell sealed container according to the present disclosure has a structure in which all sides are sealed to protect side surfaces as well as upper and lower portions of the loaded battery cells, and may minimize degradations of characteristics which may be caused by external degradation factors during movement and storage of the loaded battery cells.

Also, compared to a case where a double paper box including an inner box and an outer paper box is used, because the battery cell sealed container may be used without an inner box, and an inexpensive material not containing a rust inhibitor may be used, a packaging process may be simplified and packaging costs may be reduced.

Because the battery cell sealed container of the present disclosure includes a first tray support end and a second tray support end, when first trays are stacked and second trays are stacked, the trays may be prevented from being caught therebetween.

### DESCRIPTION OF DRAWINGS

FIG. 1 is a perspective view illustrating a battery cell sealed container, according to an embodiment of the present disclosure.
FIG. 2 is a view illustrating a battery cell sealed container, according to an embodiment of the present disclosure.
FIG. 3 is a view illustrating a first tray of a battery cell sealed container, according to an embodiment of the present disclosure.
FIG. 4 is a view illustrating an example where a plurality of first trays of a battery cell sealed container are stacked, according to an embodiment of the present disclosure of the present disclosure.
FIG. 5 is a view illustrating an example where a plurality of second trays of a battery cell sealed container are stacked, according to an embodiment of the present disclosure.

### BEST MODE

The following specific structural or functional descriptions are merely illustrative for the purpose of describing embodiments according to the concept of the present disclosure, and embodiments according to the concept of the present disclosure may be implemented in various forms, and should not be construed as limited to the embodiments described herein.

In addition, because the embodiments according to the concept of the present disclosure may make various changes and have various forms, specific embodiments are illustrated in the drawings and described in detail herein. However, it should be understood that the embodiments according to the concept of the present disclosure are not intended to limit the present disclosure to specific modes of operation, but include all modifications, equivalents and alternatives falling within the scope of the present disclosure.

Hereinafter, preferred embodiments of the present disclosure will be described in detail with reference to the accompanying drawings.

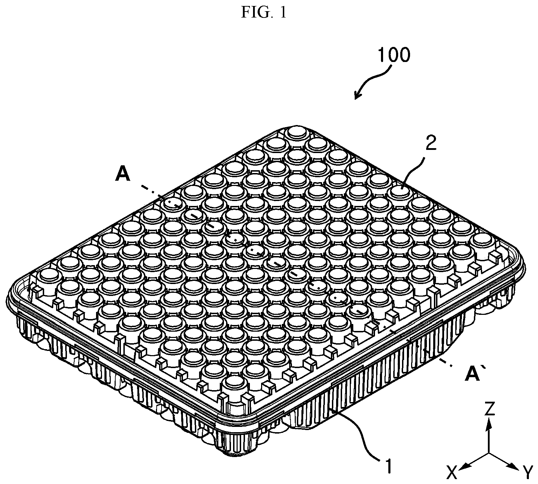

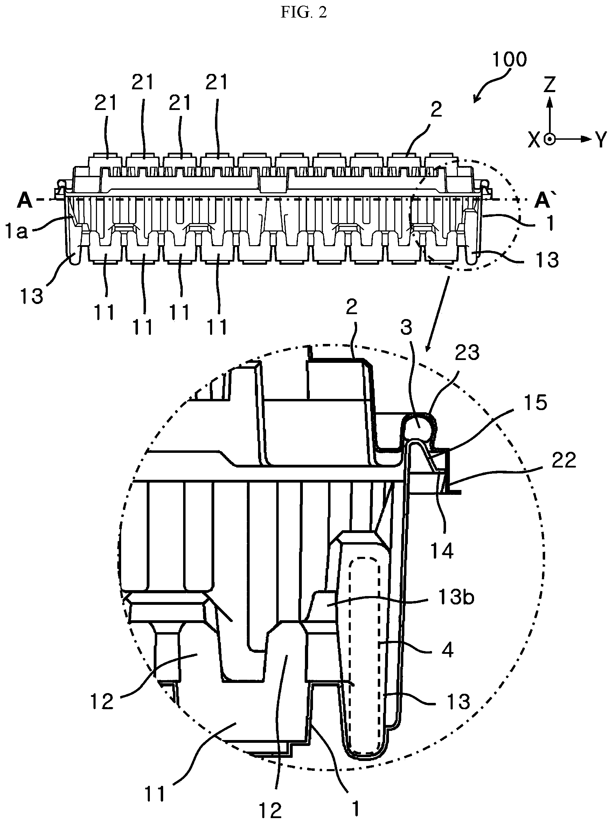

FIG. 1 is a perspective view illustrating a battery cell sealed container, according to an embodiment of the present disclosure. FIG. 2 is a view illustrating a battery cell sealed container, according to an embodiment of the present disclosure. FIG. 2 illustrates a cross-sectional view taken along line A-A' of FIG. 1 (Y-axis direction) and a partial enlarged cross-sectional view.

As shown in FIGS. 1 and 2, a battery cell sealed container 100 according to an embodiment of the present disclosure includes a first tray 1 and a second tray 2.

The first tray 1 includes a plurality of lower end receiving portions 11 in which lower ends of a plurality of battery cells (not shown, e.g., cylindrical battery cells) are respectively accommodated. The second tray 2 seals the first tray 1 and includes a plurality of upper end receiving portions 21 in which upper ends of the battery cells accommodated in the lower end receiving portions 11 are accommodated. The battery cells (in a Z direction of FIG. 1) are placed upright in the first tray 1, and lower ends of the battery cells are accommodated in the lower end receiving portions 11, and when the second tray 2 covers the first tray 1, upper ends of the battery cells are accommodated in the upper end receiving portions 21. As such, the lower end receiving portions 11 and the upper end receiving portions 21 may include seating grooves in which the battery cells are placed upright and individually loaded, and the battery cells may be safely accommodated between the lower end receiving portions 11 and the upper end receiving portions 21. In order to accommodate the battery cells in upright states, when the second tray 2 covers the first tray 1, the lower end receiving portions 11 of the first tray 1 and the upper end receiving portions 21 of the second tray 2 should be aligned with each other in a Z-axis direction.

It is preferable that the first tray 1 and the second tray 2 are formed by vacuum forming a plastic sheet to reduce manufacturing costs and have a high structural rigidity compared to a thickness. The plastic sheet has high durability to ensure the basic safety of the battery cells, and the vacuum forming is a forming method suitable to form the lower end receiving portions 11 and the upper end receiving portions 21 functioning as seating grooves.

In the illustrated example, the first tray 1 has a substantially rectangular box shape with an opening at the top (Z direction of FIG. 1), and includes a bottom surface and a side wall, and the bottom surface including the lower end receiving portions 11 has a substantially rectangular shape with a short side (extending in the Y-axis direction) and a long side (extending in an X-axis direction) and the side wall extends from the bottom surface upward (Z direction of FIG. 1). A shape of the bottom surface is not limited to a rectangular shape, but may be a square shape, a circular shape, or any of other polygonal shapes. However, considering that the battery cell sealed container 100 is put into a paper box and is transported, it is preferable that the battery cell sealed container 100 has a rectangular box shape to be efficiently accommodated in the paper box, and thus, it is also preferable that the first tray 1 has a rectangular box shape and the bottom surface of the first tray 1 has a rectangular shape.

The bottom surface and the side wall may be integrally formed. In particular, in the first tray 1, it is preferable that at least one notch groove 1a is formed in a long groove shape to connect the side wall to the lower end receiving portions 11, in order to fill a gap between the side wall and the lower end receiving portions 11 and provide structural stability. The notch groove 1a may be formed from the side wall to the bottom surface of the first tray 1, and the number of notch grooves 1a may be appropriately adjusted. For example, as shown in FIG. 1, one notch groove 1a may be formed in the short side of the bottom surface and two notch grooves 1a may be formed in the long side of the bottom surface, and thus, a total of six notch grooves 1a may be formed. In general, when a product having a substantially rectangular box shape is formed and taken out through vacuum forming, a side wall bulges outward. In the present disclosure, in order to prevent this phenomenon, the notch groove 1a may be formed in the first tray 1, to fill a gap between the lower end receiving portions 11 and the side wall of the first tray 1. In addition, the notch groove 1a may additionally improve the strength of the side wall.

In an illustrated example, the second tray 2 may have a substantially rectangular box shape with an opening at the bottom (direction opposite to the Z direction of FIG. 1), and includes a top surface and a side wall. The top surface including the upper end receiving portions 21 has a substantially rectangular shape with a short side (extending in the Y-axis direction) and a long side (extending in the X-axis direction) and the side wall extends from the top surface downward (direction opposite to the Z direction). The top surface and the side wall may be integrally formed. The second tray 2 is formed to follow a shape of the first tray 1 in order to match the first tray 1 with no gap when the second tray 2 covers the first tray 1.

Because the battery cell sealed container 100 is used to store the battery cells, it is preferable that external moisture and external contamination factors are not introduced as much as possible. In an embodiment of the present disclosure, the first tray 1 may include four side walls, and the second tray 2 may include four side walls. When the second tray 2 is located on the first tray 1 to cover the first tray 1, four surfaces of the side walls of the second tray 2 and the first tray 1 may contact each other, to seal the inside of the battery cell sealed container 100.

In order to remove internal moisture and prevent introduction of even some of external moisture, it is preferable that the first tray 1 further includes a dehumidifying agent receiving portion 13 for providing a space in which a dehumidifying agent 4 may be accommodated on an inner surface of the side wall to prevent the battery cells accommodated therein from being corroded by moisture. In other words, the dehumidifying agent receiving portion 13 may be provided between the side wall of the first tray 1 and the lower end receiving portions 11.

In this case, in order to prevent the dehumidifying agent 4 accommodated in the dehumidifying agent receiving portion 13 from being inclined inward in the first tray and contacting the battery cells, it is preferable that at least one protrusion 13b protrudes upward from the inside of the first tray 1 to support one surface of the dehumidifying agent 4. In other words, in order to prevent the dehumidifying agent 4 accommodated in the dehumidifying agent receiving portion 13 from being inclined inward in the first tray 1 and contacting the battery cells, it is preferable that at least one protrusion 13b protruding upward from the inside of the first tray 1 to support one surface of the dehumidifying agent 4 is further provided.

Also, in order to keep the battery cells upright in the first tray 1 after removing the second tray 2, it is preferable that sizes of the lower end receiving portions 11 of the first tray 1 in the Z-axis direction are greater than sizes of the upper end receiving portions 21 of the second tray 2 in the Z-axis direction. In order to provide an appropriate and sufficient space for the dehumidifying agent receiving portion 13, it is advantageous that the height of the side wall of the first tray 1 is larger, and thus, the height of the side wall of the first tray 1 may be greater than the height of a side wall of the second tray 2.

A tray or a battery packing case in the related art does not include the dehumidifying agent receiving portion 13 as proposed in the present disclosure. In the tray or the battery packing case in the related art, in order to prevent corrosion of battery cells, an expensive PP or the like containing a rust inhibitor should be used as a material of the tray or the battery packing case. However, when the dehumidifying agent receiving portion 13 is separately provided and the dehumidifying agent 4 is accommodated in the first tray 1 as in the present disclosure, an expensive PP or the like does not need to be used as a material of the first tray 1 or the second tray 2, and, for example, an inexpensive PP without a rust inhibitor may be used, thereby reducing packaging costs. Also, because the protrusion 13b is provided to support one surface of the dehumidifying agent 4, even when the dehumidifying agent 4 is inclined inward, the dehumidifying agent 4 may be caught by the protrusion 13b not to be further inclined to contact the battery cells, thereby ensuring safety in use.

Because the battery cell sealed container 100 is used to store the battery cells, it is preferable that the battery cell sealed container 100 absorbs external impact as much as possible. The present disclosure provides a configuration in which the battery cell sealed container 100 absorbs external impact and the battery cell sealed container 100 alone may ensure structural strength.

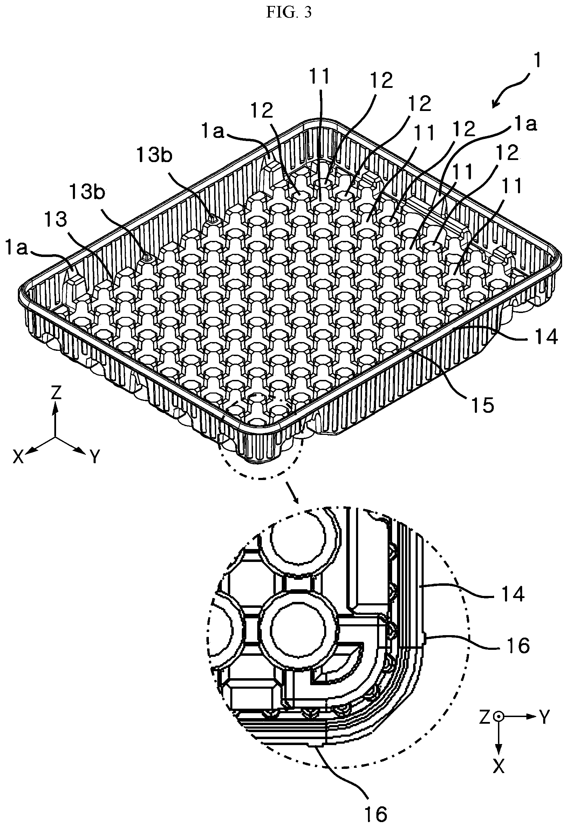

FIG. 3 is a view illustrating a first tray of a battery cell sealed container, according to an embodiment of the present disclosure. FIG. 3 illustrates a view showing the inside of the first tray and a partial enlarged top view.

As shown in FIG. 2 or 3, it is preferable that supports 12 arranged along edges of the lower end receiving portions 11 to have a certain height and support side surfaces of the battery cells accommodated in the lower end receiving portions 11 are further provided.

In particular, the supports 12 function as ribs for increasing the structural rigidity of the first tray 1 while supporting the side surfaces of the battery cells. Accordingly, the structural strength of the battery cell sealed container 100 including the first tray 1 including the supports 12 is increased. In this case, the protrusion 13b for supporting one surface of the dehumidifying agent 4 accommodated in the dehumidifying agent receiving portion 13 may be formed on the support 12.

Also, a fastening portion 15 that is convex upward along an edge of the side wall of the first tray 1 may be formed, and a fastening groove 23 that is concave at a lower portion along an edge of the side wall of the second tray 2 to be fit around the fastening portion 15 of the first tray 1 may be formed.

Also, as shown in detail in the partial enlarged cross-sectional view of FIG. 2, a packing member 3 inserted into the fastening groove 23 of the second tray 2 may be further provided, so that when the fastening portion 15 is inserted into the fastening groove 23, a space between the fastening groove 23 and the fastening portion 15 is completely sealed. As such, the packing member 3 may be assembled outside the second tray 2, and when the second tray 2 covers the first tray 1, the packing member 3 may contact the side wall of the first tray 1 to increase sealing characteristics, thereby making it possible for the battery cell sealed container according to the present disclosure to have a completely sealed structure. Accordingly, external moisture and external contamination factors are not introduced as much as possible. A packing is not attached to a vacuum formed product in general, but in the present disclosure, the packing member 3 is attached to ensure sealing characteristics.

In this case, the fastening groove 23 of the second tray 2 is a groove having a bottom surface in the second tray 2 to include an inlet opened toward the fastening portion 15 (in the direction opposite to the Z-axis), and it is preferable that an outer side surface of the groove, in particular, a lower end of an outer side surface, is inclined inward so that the inlet of the groove is narrower than the bottom surface of the groove (i.e., a cross-section of the fastening groove 23 in the Y-axis direction decreases in the direction opposite to the Z-axis), and the packing member 3 inserted into the fastening groove 23 is fixed so as not to be separated.

Also, in the first tray 1, in order to increase a sealing force and a fastening force between the first tray 1 and the second tray 2, a flange 14 may be formed outward along the edge of the side wall of the first tray 1, and as shown in detail in the partial enlarged cross-sectional view of FIG. 2, a coupling portion 22 may be formed downward (in the direction opposite to the Z-axis) along the edge of the side wall of the second tray 2 to cover and fit the flange 14.

Also, referring to FIG. 3, at least one locking end 16 may protrude outward from the flange 14, to be more strongly interference-fitted against an inner surface of the coupling portion 22 of the second tray 2.

The fitting or interference fitting between the second tray coupling portion 22 and the flange 14 may enable the battery cell sealed container 100 to be sealed and the battery cells to be fixed when the second tray 2 is coupled to the first tray 1, and may enable the second tray 2 to be easily separated from the first tray 1, and thus, a separate locking device is not required. Finally, an effect similar to locking of the second tray 2 and the first tray 1 may be achieved, with a force of a tape that binds the outside of a paper box when the battery cell sealed container 100 is packaged in the paper box.

As described above, the battery cell sealed container according to the present disclosure has a structure in which all sides are sealed to protect side surfaces as well as upper and lower portions of the loaded battery cells, and may minimize degradations of characteristics which may be caused by external degradation factors during movement and storage of the loaded battery cells.

Also, compared to a case where a double paper box including an inner box and an outer paper box is used, because the battery cell sealed container may be used without an inner box, and an inexpensive material not containing a rust inhibitor may be used, a packaging process may be simplified and packaging costs may be reduced.

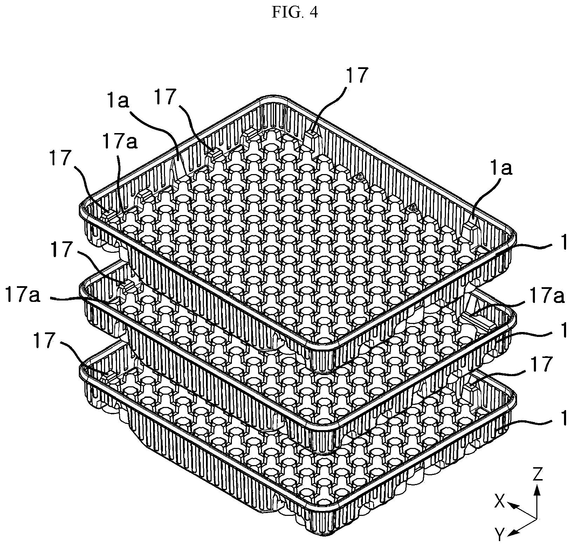

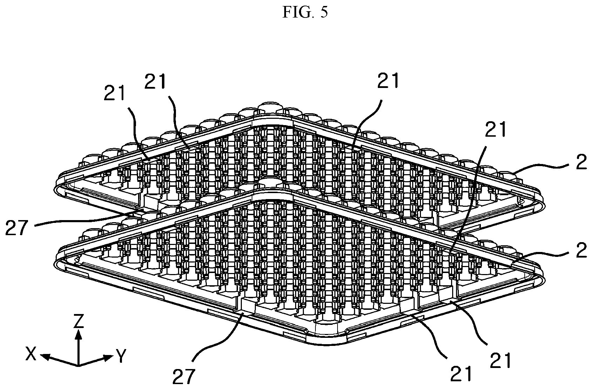

FIG. 4 is a view illustrating an example where a plurality of first trays of a battery cell sealed container are stacked in a Z-axis direction, according to an embodiment of the present disclosure. FIG. 5 is a view illustrating an example where a plurality of second trays of a battery cell sealed container are stacked in a Z-axis direction, according to an embodiment of the present disclosure.

In the first tray 1, a plurality of first tray support ends 17 may be formed on an inner side of a side wall, as shown in FIG. 4. The first tray support ends 17 may be asymmetrically arranged with respect to the center of the first tray 1. In the illustrated example, the first tray 1 may include four side walls, and the first tray support ends 17 may be formed on two side walls facing with respect to the center of the first tray 1, for example, short sides corresponding to left and right side walls in the X direction, and may be asymmetrically arranged with respect to the center of the first tray 1. When another first tray 1 in which left and right sides are stacked in different directions is stacked on the first tray 1, the first tray support end 17 may support a lower portion 17a of the other first tray 1 and may prevent the stacked first trays 1 from being caught.

Because a plurality of first trays 1 may be stacked and stored, a storage space may be efficiently managed, and because the first trays 1 are prevented from being caught therebetween during storage, when one first tray 1 is taken out and battery cells are accommodated, the first tray 1 may be easily and rapidly separated from the other first trays, thereby increasing working efficiency.

Also, as shown in FIG. 5, a plurality of second tray support ends 27 may be formed on an inner side of the second tray 2, and may be asymmetrically arranged with respect to the center of the second tray 2. In the illustrated example, the second tray 2 may have four side walls, and the second tray support ends 27 may be asymmetrically arranged on two side walls facing the center of the second tray 2, for example, left and right side walls in the X direction. When another second tray 2 in which left and right sides are stacked in different directions is stacked on the second tray 2, the second tray support end 27 formed on the other second tray 2 may be supported on the second tray 2 and the stacked second trays 2 may be prevented from being caught therebetween.

Because a plurality of second trays 2 may be stacked and stored, a storage space may be efficiently managed, and because the second trays 2 are prevented from being caught therebetween during storage, when one second tray 2 is taken out and the second tray 2 covers the first tray 1 in which the battery cells are accommodated, the second tray 2 may be easily and rapidly separated from the other second trays 2, thereby increasing working efficiency.

While the present disclosure has been particularly shown and described with reference to exemplary embodiments thereof, it will be understood by one of ordinary skill in the art that various changes in form and details may be made therein without departing from the scope of the present disclosure. Accordingly, the scope of the present disclosure is defined by the following claims described to include examples of many such variations.

**[Description of Reference Numerals]**

| | |
|---|---|
| 1: first tray | 1a: notch groove |
| 2: second tray | 3: packing member |
| 4: dehumidifying agent | 11: lower end receiving portion |
| 12: support | 13: dehumidifying agent receiving portion |
| 13b: protrusion | 14: flange |
| 15: fastening portion | 16: locking end |
| 17: first tray support end | 17a: lower portion |
| 21: upper end receiving portion | 22: second tray coupling portion |
| 23: fastening groove | 27: second tray support end |

## Claims

1. A battery cell sealed container comprising:
a first tray comprising a bottom surface and a side wall, wherein the bottom surface comprises a plurality of lower end receiving portions in which lower ends of a plurality of battery cells are respectively accommodated and the side wall extends upward from the bottom surface; and
a second tray configured to seal the first tray, the second tray comprising a top surface and a side wall, wherein the top surface comprises a plurality of upper end receiving portions in which upper ends of the plurality of battery cells accommodated in the lower end receiving portions are accommodated and the side wall extends downward from the top surface.

2. The battery cell sealed container according to claim 1, wherein
the first tray further comprises a flange extending outward along an edge of the side wall of the first tray, and
the second tray further comprises a coupling portion extending downward along an edge of the side wall of the second tray to cover and fit the flange.

3. The battery cell sealed container according to claim 2, wherein at least one locking end protrudes outward from the flange and is interference-fitted against an inner surface of the coupling portion of the second tray.

4. The battery cell sealed container according to claim 1, wherein
the first tray further comprises a fastening portion that is convex upward along an edge of the side wall of the first tray, and
the second tray further comprises a fastening groove that is concave at a lower portion along an edge of the side wall of the second tray to be fit around the fastening portion of the first tray,
wherein the second tray further comprises a packing member inserted into the fastening groove of the second tray to seal a space between the fastening groove and the fastening portion.

5. The battery cell sealed container according to claim 4, wherein the fastening groove of the second tray is a groove having a bottom surface in the second tray to include an inlet opened toward the fastening portion, wherein an outer side surface of the groove is inclined so that the inlet of the groove is narrower than the bottom surface of the groove, and the packing member inserted into the fastening groove is fixed so as not to be separated.

6. The battery cell sealed container according to claim 1, wherein the first tray has a substantially rectangular box shape with an opening at a top thereof, and the bottom surface and the side wall of the first tray are integrally formed, and
the second tray has a substantially rectangular box shape with an opening at a bottom thereof, and the top surface and the side wall of the second tray are integrally formed.

7. The battery cell sealed container according to claim 6, wherein each of the first tray and the second tray comprises four side walls, wherein when the second tray is located on the first tray to cover the first tray, four surfaces of the side walls of the first tray and the second tray contact each other, to seal an inside of the battery cell sealed container.

8. The battery cell sealed container according to claim 7, wherein a height of the side wall of the first tray is greater than a height of the side wall of the second tray.

9. The battery cell sealed container according to claim 1, wherein the first tray further comprises at least one notch groove that connects the side wall of the first tray to the lower end receiving portions.

10. The battery cell sealed container according to claim 9, wherein the notch groove fills a gap between the side wall of the first tray and the lower end receiving portions.

11. The battery cell sealed container according to claim 1, further comprising a dehumidifying agent receiving portion configured to provide a space in which a dehumidifying agent is accommodated on an inner surface of the side wall of the first tray.

12. The battery cell sealed container according to claim 11, wherein the dehumidifying agent receiving portion is provided between the side wall of the first tray and the lower end receiving portions, and the battery cell sealed container further comprises at least one protrusion protruding upward from an inside of the first tray to support one surface of the dehumidifying agent so that the dehumidifying agent accommodated in the dehumidifying agent receiving portion is prevented from being inclined inward in the first tray and contacting the battery cells.

13. The battery cell sealed container according to claim 12, further comprising supports arranged along edges of the lower end receiving portions to support side surfaces of the battery cells accommodated in the lower end receiving portions.

14. The battery cell sealed container according to claim 13, wherein the dehumidifying agent receiving portion is provided between the side wall and the lower end receiving portions, and the battery cell sealed container further comprises, on the support, at least one protrusion protruding upward from an inside of the first tray to support one surface of the dehumidifying agent so that the dehumidifying agent accommodated in the dehumidifying agent receiving portion is prevented from being inclined inward in the first tray and contacting the battery cells.

15. The battery cell sealed container according to claim 11, wherein each of the first tray and the second tray is formed of a PP without a rust inhibitor.

16. The battery cell sealed container according to claim 1, further comprising supports arranged along edges of the lower end receiving portions to support side surfaces of the battery cells accommodated in the lower end receiving portions.

17. The battery cell sealed container according to claim 1, wherein a plurality of first tray support ends are formed on an inner side of the first tray, and are asymmetrically arranged with respect to a center of the first tray.

18. The battery cell sealed container according to claim 1, wherein a plurality of second tray support ends are formed on an inner side of the second tray, and are asymmetrically arranged with respect to a center of the second tray.
